Europäisches Patentamt

**European Patent Office**

Office européen des brevets

(11) Numéro de publication: **0 036 821**
**B1**

(12) **FASCICULE DE BREVET EUROPEEN**

(45) Date de publication du fascicule du brevet:
04.09.85

(21) Numéro de dépôt: **81400455.2**

(22) Date de dépôt: **23.03.81**

(51) Int. Cl.⁴: **G 21 C 7/20**, G 21 C 3/32

(54) **Tubes-guides pour assemblages combustibles de réacteurs nucléaires à eau légère.**

(30) Priorité: **26.03.80 FR 8006695**

(43) Date de publication de la demande:
**30.09.81 Bulletin 81/39**

(45) Mention de la délivrance du brevet:
**04.09.85 Bulletin 85/36**

(84) Etats contractants désignés:
**BE DE GB IT SE**

(56) Documents cités:
**DE - A - 1 810 228**
**DE - A - 2 023 587**
**DE - B - 1 250 020**
**FR - A - 1 296 086**
**FR - A - 1 567 000**
**FR - A - 2 181 014**
**FR - A - 2 189 814**
**FR - A - 2 413 756**
**GB - A - 903 289**
**US - A - 3 801 734**

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**
Titulaire: **FRAMATOME ET CIE., Tour Fiat 1, Place de la
Coupole, F-92400 Courbevoie (FR)**

(72) Inventeur: **Leclercq, Joseph, 30, route de Champagne,
F-69370 Saint Didier (FR)**

(74) Mandataire: **Mongrédien, André et al, c/o
BREVATOME 25, rue de Ponthieu, F-75008 Paris (FR)**

## Description

La présente invention se rapporte aux assemblages combustibles pour réacteurs nucléaires et plus particulièrement aux assemblages combustibles pour les réacteurs refroidis à l'eau légère.

De façon plus particulière encore, la présente invention a pour objet des perfectionnements aux tubes guides de tels assemblages combustibles dont on commencera par conséquent par rappeler la constitution générale connue.

On pourra se référer utilement, pour la description d'assemblages combustibles pour réacteurs à eau légère d'un type connu, aux deux brevets US-A-4 061 536 et US-A-3 791 466 de la Société Westinghouse Electric Corporation. Dans des éléments du genre de ceux décrits dans ces brevets, le combustible nucléaire du réacteur est réparti selon une pluralité de crayons combustibles logés dans le cœur du réacteur selon une répartition en assemblages jointifs de section générale carrée. Chaque assemblage combustible, s'étendant sur plusieurs mètres de long et possédant une armature mécanique rigide est maintenu entre les plaques de cœur supérieure et inférieure. Cette armature comporte deux pièces d'extrémité respectivement supérieure et inférieure munies d'orifices permettant le passage de l'eau de réfrigération qui circule verticalement de bas en haut, et un certain nombre de tubes guides assurant la solidité de l'assemblage par leur fixation aux pièces d'extrémité supérieure et inférieure. Le long de chaque assemblage, un certain nombre de grilles de maintien, liées aux tubes guides et délimitant des cellules de section carrée, permettent le passage et le maintien transversal des crayons de combustible eux-mêmes qui sont pour ainsi dire suspendus par frottement dans les grilles sans contact avec les pièces d'extrémité supérieure et inférieure.

De façon également connue, les tubes guides ont en plus de leur fonction de maintien mécanique de l'assemblage, une fonction de logement des crayons absorbants qui servent à tout instant au contrôle de la réaction en chaîne et que l'on insère le plus rapidement possible dans l'assemblage, au travers de la pièce supérieure ajourée à cet effet, lorsque l'on veut, pour une raison quelconque, provoquer un arrêt rapide du fonctionnement du réacteur.

De façon classique, les pièces d'extrémité des assemblages combustibles sont en acier inoxydable ou en inconel, c'est-à-dire en des matériaux absorbant assez fortement les neutrons, alors que les tubes guides sont en zircaloy de propriétés neutroniques beaucoup plus favorables.

Dans les assemblages combustibles du type connu rappelé ci-dessus, il est également nécessaire de prévoir, au niveau des tubes guides, des dispositifs de freinage qui permettent lors d'un arrêt rapide du réacteur, de ralentir de façon notable la vitesse de chute des crayons de contrôle en fin de parcours de ceux-ci dans leurs différents tubes guides. Dans les réalisations connues jusqu'à ce jour, cet effet de freinage est obtenu par un rétreint du tube guide situé vers sa partie inférieure, par exemple à une certaine hauteur au-dessus de la grille la plus basse, et des orifices sont prévus au-dessus de cette zone de rétreint pour permettre l'évacuation hors du tube guide de l'eau chassée lors de la chute du crayon de contrôle.

Par ailleurs, dans ces mêmes solutions connues jusqu'à présent, la fixation du tube guide sur la pièce d'extrémité supérieure de l'assemblage se fait à l'aide d'un manchon intermédiaire en un matériau compatible avec celui de la pièce d'extrémité, car il n'est pas possible de souder directement le tube guide en zircaloy sur la pièce en acier ou en inconel. Ceci conduit par conséquent à utiliser un manchon d'acier emmanché sur la surface externe de la partie supérieure du tube guide et maintenu à l'aide d'un certain nombre de déformations mécaniques qui assurent la fixation du manchon sur le tube guide. Ce manchon est lui-même soudé ou brasé d'une part à la pièce d'extrémité supérieure et, d'autre part, à la grille supérieure, assurant ainsi la liaison mécanique de la pièce d'extrémité avec l'ensemble de la structure.

Ces dispositions engendrent toutefois un certain nombre d'inconvénients sérieux que l'on énumérera ci-après.

Tout d'abord, la nécessité de constituer lors de leur fabrication les tubes guides en deux parties de diamètres différents reliées par une zone de rétreint de forme générale conique, constitue une difficulté et nécessite un outillage et un contrôle de fabrication particulièrement soignés. De plus, le freinage ainsi obtenu en fin de chute des crayons de contrôle n'est pas progressif et intervient de façon relativement brutale au moment du franchissement du rétreint, ce qui, dans certains cas, peut être néfaste pour le crayon.

Par ailleurs, l'emploi d'une liaison par soudage ou brasage entre la grille supérieure et la pièce d'extrémité supérieure à l'aide d'un manchon d'acier impose, pour des raisons de compatibilité métallurgique, une grille en acier ou en inconel, ce qui est très préjudiciable au bilan neutronique du réacteur.

La présente invention a précisément pour objet des tubes guides pour assemblages combustibles de réacteurs nucléaires du type à eau légère qui permettent, à l'aide de moyens particulièrement simples, de pallier les inconvénients rappelés ci-dessus, tout en apportant, en même temps, un certain nombre d'avantages complémentaires non négligeables.

Ces tubes guides possèdent de façon connue des dispositifs de freinage des crayons de contrôle constitués par des moyens de restriction du diamètre desdits tubes guides et associés à des orifices percés dans les tubes guides eux-mêmes pour produire un amortissement hydraulique progressif de la fin de chute des crayons de contrôle, et sont caractérisés en ce que lesdits moyens de restriction sont pour chaque tube guide une chemise interne en zircaloy soudée par points audit tube guide dont le diamètre interne permet le passage avec un jeu calibré du crayon de contrôle correspondant et que ladite chemise est répartie sur la partie inférieure de chaque tube guide.

Selon une caractéristique importante de la présente invention, les moyens de restriction du diamètre des tubes guides sont le plus souvent rapportés sur ceux-ci, ce qui permet, lors de la fabrication, de réaliser lesdits tubes avec un diamètre constant d'une extrémité à l'autre.

Par ailleurs, les moyens de restriction du diamètre des tubes guides étant selon l'invention répartis sur une certaine zone de la partie inférieure des tubes (par exemple sur 1/7ème environ de leur hauteur), le freinage obtenu est beaucoup plus progressif que celui que l'on réalisait dans les dispositifs connus jusqu'à ce jour.

Selon un premier mode de mise en œuvre de l'invention, les moyens de restriction du diamètre des tubes guides sont constitués pour chaque tube guide par une chemise interne continue en zircaloy, soudée par points audit tube guide et dont le diamètre interne permet le passage avec un jeu calibré du crayon de contrôle correspondant.

Selon un deuxième mode de mise en œuvre, les moyens de restriction du diamètre des tubes guides sont constitués pour chaque tube guide par une chemise interne discontinue, composés d'éléments tubulaires en zircaloy, soudés ou sertis chacun audit tube guide, répartis sur la partie inférieure de la hauteur dudit tube guide et dont le diamètre interne permet le passage avec un jeu calibré du crayon de contrôle correspondant.

La fixation de chaque tube guide d'un assemblage combustible est réalisée, sur la pièce d'extrémité supérieure, soit de façon connue par des expansions dans des orifices munis de gorges annulaires, percés dans ladite plaque, soit, selon l'invention, à l'aide d'un bouchon métallique fixé dans un alésage à fond conique percé dans la pièce d'extrémité.

Selon une autre caractéristique également importante de la présente invention, les tubes guides sont fixés à la pièce d'extrémité inférieure de l'assemblage à l'aide d'un bouchon serti dans la chemise interne et lié à la pièce inférieure par des moyens mécaniques démontables.

On voit ainsi qu'en renonçant à la fixation par soudure des tubes guides sur la pièce d'extrémité supérieure de l'assemblage et en la remplaçant par une fixation mécanique du type à expansion dans un orifice traversant la pièce d'extrémité supérieure, on facilite la fixation en supprimant les manchons d'acier rappelés précédemment à propos de la description de l'art antérieur.

De toute façon, l'invention sera mieux comprise en se référant à la description qui suit de plusieurs exemples de réalisation de tubes guides perfectionnés, description qui sera faite en se référant aux fig. 1 à 8 suivantes sur lesquelles:

la fig. 1 représente le schéma d'implantation connue des assemblages combustibles dans un cœur de réacteur à eau légère;

la fig. 2 représente en coupe selon l'axe, le premier mode de réalisation d'un tube guide possédant un chemisage interne conformément à l'invention;

la fig. 3 représente un premier mode de fixation à la pièce supérieure possible d'un tube guide;

la fig. 4 représente un autre mode de fixation à la pièce supérieure d'un tube guide;

la fig. 5 représente le deuxième mode de mise en œuvre de l'invention dans lequel la restriction de diamètre du tube guide est constituée par une chemise interne discontinue.

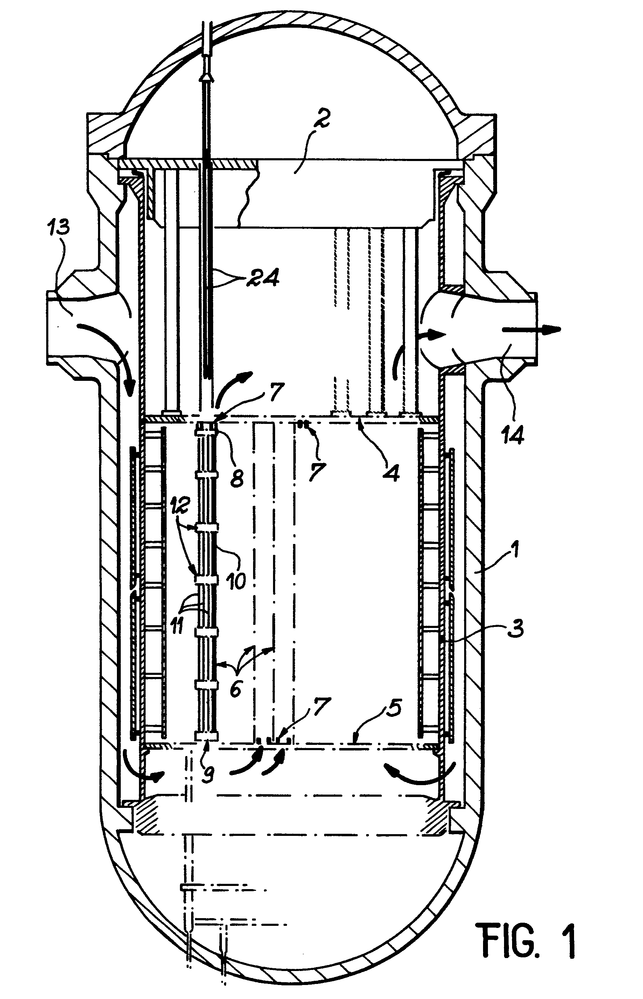

Sur la fig. 1, on a représenté la disposition générale connue des assemblages combustibles d'un réacteur à eau légère dont la cuve est référencée 1. Dans cette cuve 1 se trouvent suspendus les équipements internes. Ces équipements internes se composent d'équipements internes supérieurs et d'équipements internes inférieurs. Les équipements internes supérieurs sont constitués par une plaque supérieure 2 et une plaque inférieure 4 reliées entre elles par des entretoises. Les équipements internes inférieurs sont constitués d'une virole 3 et d'une plaque inférieure 5 réunies par soudure. C'est entre ces deux plaques 4 et 5 que sont disposés les assemblages combustibles tels que 6 qui reposent sur la plaque 5 et sont maintenus entre les plaques 4 et 5, avec un jeu axial, à l'aide d'un certain nombre de pions de centrage tels que 7. La structure d'un assemblage combustible 6 comporte une pièce d'extrémité supérieure 8 et une pièce d'extrémité inférieure 9, et elle est rigidifiée et entretoisée par des tubes guides tels que 10 auxquels s'applique précisément la présente invention. Les crayons combustibles 11 sont maintenus en place par des grilles de maintien 12 définissant des cellules de section carrée pour le passage des crayons 11, les grilles 12 étant elles-mêmes liées aux tubes guides 10. Ainsi que rappelé précédemment, les tubes guides 10 sont creux et servent également de logements pour le passage des crayons absorbants utilisés pour le contrôle de la réaction en chaîne et l'arrêt rapide du réacteur en cas de besoin.

L'ensemble décrit sur la fig. 1 baigne dans de l'eau chaude pressurisée à une température voisine de 300 °C qui circule dans le cœur entre une entrée 13 et une sortie 14, baignant ainsi les différents assemblages 6 d'un courant réfrigérant ascendant.

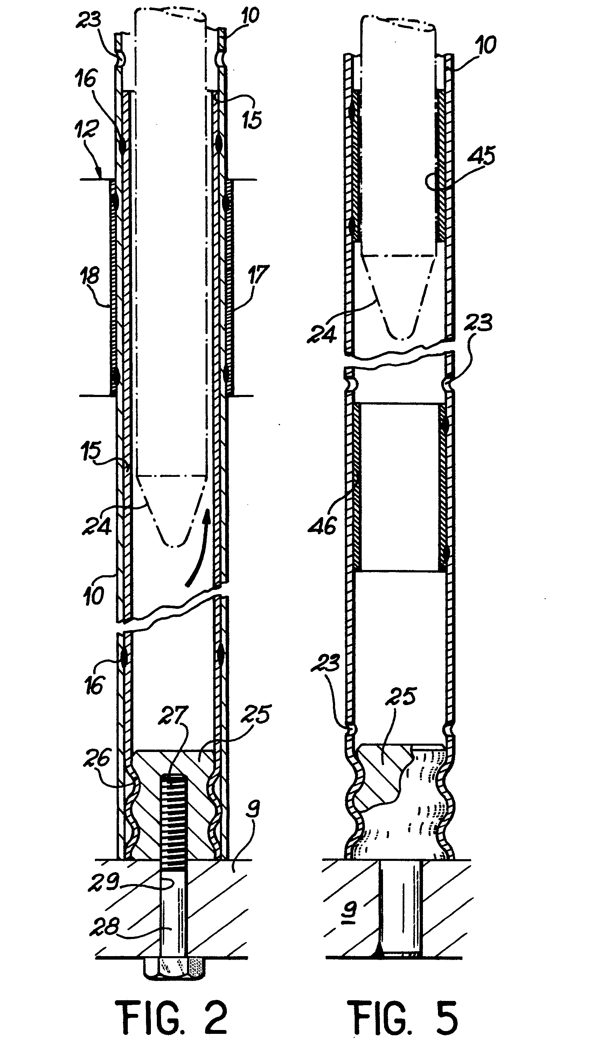

Sur la fig. 2, on a représenté un tube guide 10 muni, conformément au premier mode de mise en œuvre de l'invention, d'une chemise interne 15, en zircaloy comme le tube 10, et soudée à celui-ci en un certain nombre de points tels que 16, à l'aide de soudures électriques par contact. Sur la partie haute de la fig. 2, on voit le tube guide 10 au passage d'une grille 12 représentée schmématiquement. On a représenté en coupe en 17 et 18 les deux plaquettes de la grille 12 perpendiculaires au plan de figure et sur lesquelles le tube guide 10 est fixé.

Selon l'invention, ce tube guide 10 est muni d'un certain nombre d'orifices tels que 23, répartis sur sa hauteur, pour permettre l'évacuation de l'eau de réfrigération qu'il contient lorsqu'un crayon de contrôle, schématisé en pointillés en 24 sur la figure, descend à l'intérieur de la chemise 15. Sur la fig. 2, on a représenté seulement deux orifices 23 situés à la même altitude, mais il est bien entendu que l'on peut sans sortir du cadre de la présente invention, adopter pour les orifices 23 toutes dispositions conformes aux caractéristiques que l'on souhaite obtenir pour le freinage progressif du crayon 24. Notamment, ces orifices 23 peuvent être répartis sur toute la partie inférieure du tube guide 10 et situés soit au-dessus de la zone où commence la chemise 15 soit au-dessous de cette même zone, soit à la fois au-dessus et au-dessous. Parmi ces orifices 23, certains servent à l'évacuation rapide de l'eau contenue dans le tube guide 10, et d'autres, calibrés, assurent le maintien à une valeur déterminée de la surpression de l'eau dans l'amortisseur hydraulique que constitue le tube guide 10.

Sur la fig. 2, on voit également une particularité intéressante de la présente invention qui réside dans le mode de liaison particulier entre la pièce d'extrémité inférieure 9 et le tube guide 10. A cet effet, un bouchon 25, en acier inoxydable, est serti à la partie inférieure de la chemise interne 15 qui possède à cet effet des ondulations périphériques annulaires 26 empêchant tout mouvement axial du bouchon 25 par rapport à la chemise interne 15. Un filetage interne 27 permet de fixer ce bouchon par tout moyen approprié tel que par exemple une vis 28 à la pièce d'extrémité inférieure 9. Cette vis 28 peut être soit une vis pleine qui traverse l'alésage 29 correspondant prévu dans la pièce d'extrémité inférieure 9, soit une vis creuse de façon à laisser également une possibilité d'évacuation d'eau selon son axe lors de la chute d'un crayon de contrôle. Cette vis peut être également munie d'une virole d'extrémité déformable pour obtenir son blocage en rotation. Dans une autre variante de réalisation, le bouchon 25 est prolongé à l'aide d'un pion qui s'emmanche dans l'alésage 29 et que l'on soude au débouché de cet alésage sur la pièce d'extrémité inférieure 9.

Le bouchon 25 peut être lui-même en zircaloy; dans ce cas, on peut le souder purement et simplement sur la chemise interne 15 qui n'a plus besoin alors de comporter les ondulations 26. Ce bouchon est alors fixé au moyen d'une vis comme dans une des solutions décrites ci-dessus.

On conçoit facilement en se référant à la fig. 2 que la constitution de la partie inférieure du tube guide 10 avec la chemise interne 15 conduit à une réduction du diamètre interne de ce tube qui joue le rôle d'amortisseur hydraulique pour les crayons de contrôle arrivant en fin de course lors d'une chute provoquée de la grappe de ces crayons en vue d'un arrêt rapide du réacteur. Les orifices 23 prévus sur la hauteur du tube guide 10 assurent à la fois la circulation du réfrigérant en service normal ainsi que l'évacuation de la partie de ce dernier contenue dans l'intérieur du tube guide 10 lors de la chute amortie des crayons de contrôle.

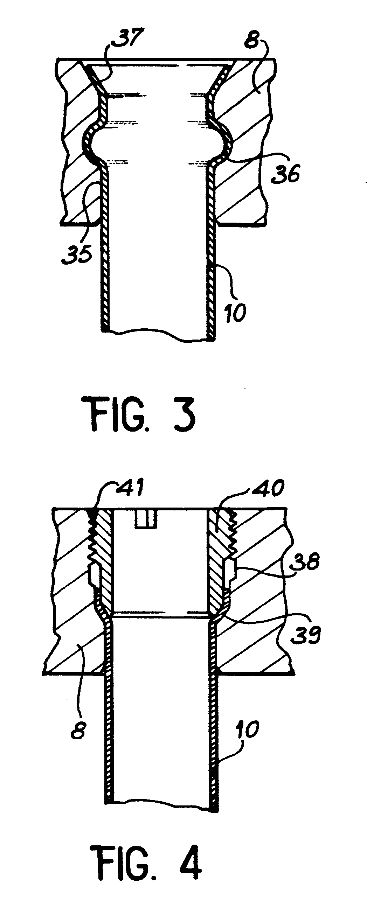

La fig. 3 montre un premier mode de fixation entre la pièce d'extrémité supérieure 8 et le tube guide 10. Dans un alésage 35 traversant de part en part la pièce d'extrémité supérieure 8 sont usinées des gorges annulaires 36 ainsi que des alésages 37. Après positionnement du tube guide 10 dans l'alésage 35, on opère une déformation de ce tube guide 10 par roulage ou expansion à la hauteur des formes 36 et 37, de façon à assurer sa fixation axiale dans la pièce d'extrémité supérieure 8.

La fig. 4 montre une variante du mode de fixation du tube guide 10 dans la pièce d'extrémité 8 dans laquelle l'alésage 35 est simplifié et remplacé par un fraisage à fond conique. Dans ce mode de mise en œuvre, le tube guide 10 est expansé au fond de l'alésage 38 et il épouse la forme du chanfrein 39. Il est ainsi bloqué axialement à l'aide dun bouchon 40 en acier inoxydable emmanché ou vissé dans la pièce d'extrémité 8 et bloqué par une soudure extérieure 41.

Sur la fig. 5 qui montre le deuxième mode de mise en œuvre des perfectionnements selon l'invention, on retrouve les éléments correspondants de la fig. 2, mais cette fois les moyens de restriction du diamètre du tube guide 10 sont constitués par un certain nombre de chemisages internes localisés tels que 45 et 46 soudés ou sertis sur le tube guide 10. Les éléments de la fig. 5 identiques à ceux de la fig. 2 ne sont pas décrits à nouveau, mais portent les mêmes références. Toutefois, dans ce cas, certains des orifices 23 sont calibrés.

Dans le mode de réalisation de la fig. 5, le bouchon 25 situé à la partie inférieure du tube guide 10 n'est plus lié au chemisage interne qui, à ce niveau, n'existe plus, et il est simplement soudé ou serti directement sur le tube guide 10. Comme dans les réalisations précédentes, des orifices 23 sont prévus à certains niveaux dans le tube guide 10 permettant ainsi lors de la chute des crayons de contrôle 24 de réaliser un pot d'amortissement hydraulique découlant de l'existence de plusieurs emplacements de fuite contrôlée de l'eau occupant l'intérieur du tube guide 10. La répartition spatiale selon la longueur du tube 10 des différentes chemises internes telles que 45 et 46 permet d'obtenir, selon l'invention, un freinage progressif et en douceur de la fin de la chute des crayons de contrôle. Le nombre et la longueur des chemisages internes discontinus 45, 46 ainsi que le nombre et l'emplacement des orifices d'évacuation de l'eau 23 sont déterminés en fonction des caractéristiques du freinage souhaité et du débit de fuite désiré.

**Revendications**

1. Tubes guides pour des assemblages combustibles de réacteurs nucléaires à eau légère, lesdits assemblages étant immergés en fonctionnement dans l'eau de réfrigération du cœur du réacteur, lesdits tubes guides (10) sont réalisés en zircaloy et sont fixés à leur deux extrémités respectivement à une pièce d'extrémité supérieure (8) et à une pièce d'extrémité inférieure (9) en acier inoxydable ou en inconel, et comportent des dispositifs de freinage, lors d'un arrêt rapide du réacteur, de la chute des crayons de contrôle auxquels ils servent de logement, lesdits dispositifs de freinage sont constitués par des moyens de restriction (15; 45, 46) du diamètre desdits tubes guides (10) et par des orifices associés (23) percés dans les tubes guides (10) eux-mêmes pour produire un amortissement hydraulique progressif de la fin de chute des crayons de contrôle (24) caractérisés en ce que lesdits moyens de restriction (15; 45, 46) sont pour chaque tube guide une chemise interne en zircaloy (15) soudée par points audit tube guide dont le diamètre interne permet le passage, avec un jeu calibré, du crayon de contrôle (24) correspondant et que ladite chemise est répartie sur la partie inférieure de chaque tube guide.

2. Tubes guides selon la revendication 1, caractérisés en ce que la chemise interne est discontinue et est composée d'éléments tubulaires en zircaloy (45, 46) qui sont soudés chacun audit tube guide (10).

3. Tubes guides selon l'une quelconque des revendications 1 et 2, caractérisés en ce que les moyens de restriction (15; 45, 46) du diamètre des tubes guides sont répartis sur une zone qui représente environ la septième partie inférieure de leur hauteur.

4. Tubes guides selon l'une quelconque des renvendications 1 à 3 précédentes, caractérisés en ce que la fixation de chaque tube guide (10) d'un assemblage combustible est réalisée, sur la pièce d'extrémité supérieure (8), à l'aide d'un alésage à fond conique (39) dans lequel il est bloqué axialement à l'aide d'un bouchon (40) en acier inoxydable fixé dans la pièce d'extrémité (8).

5. Tubes guides selon l'une quelconque des revendications 1 à 3 précédentes, caractérisés en ce que la fixation de chaque tube guide (10) d'un assemblage combustible est réalisé, sur la pièce d'extrémité inférieure (9) à l'aide d'un bouchon métallique (25) serti ou soudé à la chemise interne (15) et lié à la pièce d'extrémité inférieure (9) par des moyens mécaniques démontables (28).

**Claims**

1. Guide tubes for fuel assemblies of light water reactors, said assemblies being immersed during operation in the cooling water of the reactor core, said guide tubes (10) being formed from zircaloy, and fixed at their respective ends to an upper end piece (8) and a lower end piece (9) of stainless steel or inconel, and comprising braking devices for the fall of control rods located within, during rapid shut-down of the reactor, said braking devices being constituted by diameter-restriction means (15; 45, 46) for said guide tubes (10) and by associated orifices (23) pierced in the guide tubes(10) whereby to produce progressive hydraulic absorption at the end of the fall of control rods (24) characterized in that said restriction means (15; 45, 46) comprise an internal sleeve of zircaloy (15) for each guide tube spot-welded to said guide tube, whose internal diameter permits passage, with a calibrated play, of the corresponding control rod (24) and in that said sleeve is located at the lower part of each guide tube.

2. Guide tubes according to Claim 1, characterized in that the internal sleeve is discontinuous, and comprises tubular elements (45, 46) of zircaloy each being welded to said guide tube (10).

3. Guide tubes according to either of Claims 1 and 2, characterized in that the diameter-restriction means (15; 45, 46) are distributed in a zone representing the lower seventh part of their height.

4. Guide tubes according to any one of the preceding Claims 1 to 3, characterized in that fixation of each guide tube (10) of a fuel assembly is provided at the upper end piece (8) by means of a bore with a conical end (39) in which it is axially locked by means of a stopper (40) in stainless steel fixed in the end piece (8).

5. Guide tubes according to any one of the preceding Claims 1 to 3, characterized in that fixation of each guide tube (10) of a fuel assembly is produced at the lower end (9) by a metal stopper (25) crimped or welded to the internal sleeve (15) and connected to the lower end piece (9) by mechanically movable means (28).

**Patentansprüche**

Führungsrohre in Brennelementenbündel für Leichtwasserkernreaktoren, die beim Betrieb in das Kühlwasser des Reaktorkernes eingetaucht sind, wobei die Führungsrohre (10) aus Zircaloy hergestellt und an ihren beiden Enden an einem oberen Endteil (8) bzw. einem unteren Endteil (9) aus rostfreiem Stahl oder Inconel befestigt sind und für das schnelle Abschalten des Reaktors Bremseinrichtungen für das Herunterfallen von Steuerstäben aufweisen, denen sie als Gehäuse dienen, wobei die Bremseinrichtungen von Mitteln (15; 45, 46) zur Verringerung des Durchmessers der Fürhungsrohre (10) und zugeordneten, in die Führungsrohre (10) selbst gebohrten Öffnungen (23) gebildet sind, um am Fallende der Steuerstäbe (24) eine zunehmende, hydraulische Dämpfung hervorzurufen, dadurch gekennzeichnet, dass die Verringerungsmittel (15; 45, 46) für jedes Führungsrohr eine innere Hülse (15) aus Zircaloy sind, die an das Führungsrohr punktgeschweisst ist und deren Innendurchmesser den Durchgang des entsprechenden Steuerstabes (24) mit einem kalibrierten Spiel erlaubt, und dass die Hülse über den unteren Abschnitt jedes Führungsrohres verteilt ist.

2. Führungsrohre nach Anspruch 1, dadurch gekennzeichnet, dass die innere Hülse unterbrochen ist und aus rohrförmigen Elementen (45, 46) aus Zircaloy zusammengesetzt ist, die jeweils an das Führungsrohr (10) angeschweisst sind.

3. Führungsrohre nach Anspruch 1 oder 2, dadurch gekennzeichnet, dass die Mittel (15; 45, 46) zur Verringerung des Durchmessers der Führungsrohre über einen Bereich aufgeteilt sind, der ungefähr das untere Abschnittssiebtel ihrer Höhe darstellt.

4. Führungsrohre nach einem der Ansprüche 1 bis 3, dadurch gekennzeichnet, dass die Befestigung jeden Führungsrohres (10) eines Brennelementenbündels an dem oberen Endteil (8) mittels einer Bohrung mit konischem Boden (39) hergestellt ist, in der das Führungsrohr axial mittels eines Einsatzes (40) aus rostfreiem Stahl festgelegt ist, der in dem Endteil (8) befestigt ist.

5. Führungsrohre nach einem der Ansprüche 1 bis 3, dadurch gekennzeichnet, dass die Befestigung jeden Führungsrohres (10) eines Brennelementenbündels an dem unteren Endteil (9) mit Hilfe eines Metallstopfens (25) hergestellt ist, der an die innere Hülse (15) angepresst oder angeschweisst ist und mit dem unteren Endteil (9) mit mechanischen, lösbaren Mitteln (28) verbunden ist.

FIG. 1

**FIG. 2**          **FIG. 5**

FIG. 3

FIG. 4